# EUROPEAN PATENT APPLICATION

(11) **EP 3 424 814 A1**
(43) Date of publication of application: **09.01.2019**
(21) Application number: 17759899.2
(22) Date of filing: 27.02.2017
(51) Int. Cl.: B64C 13/18, B64C 39/02, G05D 1/12

(54) **UNMANNED AIR VEHICLE, UNMANNED AIR VEHICLE CONTROL SYSTEM, FLIGHT CONTROL METHOD, AND PROGRAM STORAGE MEDIUM**

(30) Priority: 02.03.2016 JP 2016039845
(71) Applicant: NEC Corporation, Tokyo 108-8001 (JP)
(72) Inventor: OBA Takahiro, Tokyo 108-8001 (JP)
(74) Representative: Vossius & Partner Patentanwälte Rechtsanwälte mbB
(86) International application number: PCT/JP2017/007430
(87) International publication number: WO 2017/150433

(57) **Abstract**

Provided is a technique whereby operability and working efficiency of flight control for an unmanned air vehicle can be improved. A photographing unit 81 photographs a projection object onto which light is projected after being outputted by a directivity projector for outputting light. A position calculator 82 uses the image photographed by the photographing unit 81 to calculate the relative distance between the position of a host vehicle and an indicated light spot projected on the projection object by the directivity projector, and to calculate the position of the indicated light spot on the basis of the calculated relative distance. A flight control unit 83 controls the flight of the host vehicle on the basis of a flight path drafted according to the calculated position of the indicated light spot.

## Description

### [Technical Field]

The present invention relates to a technique for controlling a flight of an unmanned aircraft.

### [Background Art]

A small unmanned aircraft is used for aerial photography mainly aiming at, for example, entertainment, disaster state determination, and facility inspection. Among others, it has recently been contemplated to apply an unmanned aircraft to inspection of facilities such as a plant and a building.

Two methods are generally available to operate an unmanned aircraft. One method allows operation by manual steering using a wireless remote steering device. The other method allows operation based on a flight planning path generated in advance.

As an exemplary method for operation based on a flight planning path generated in advance, a method for controlling a flight of a small unmanned aircraft is disclosed in, for example, PTL 1. In the method disclosed in PTL 1, captured images of a marker attached to a small unmanned aircraft are acquired by a plurality of camera devices which capture images from the ground, and attribute information of the captured images of the marker is extracted. Based on the attribute information, information concerning the position and information concerning the attitude of the small unmanned aircraft with reference to the camera devices are calculated. The discrepancy between the calculated information concerning the position and a predetermined flight path, and the discrepancy between the calculated information concerning the attitude and reference information are identified, and control data for eliminating these discrepancies is generated and transmitted to the small unmanned aircraft.

### [Citation List]

### [Patent Literature]

**[PTL 1]** Japanese Unexamined Patent Application Publication No. 2006-51864

### [Summary of Invention]

### [Technical Problem]

Generally, time-consuming training is necessary to learn a manual steering skill for an unmanned aircraft. When a flight is made around a building, high skill in steering is also required to prevent an unmanned aircraft from touching or colliding with the building due to a sudden gust of wind or a change in magnetic field. This poses a problem: manual steering of an unmanned aircraft using a wireless remote steering device requires high skill in steering.

In the flight control of a small unmanned aircraft as disclosed in PTL 1, since a flight planning path file suitable for a mission always needs to be generated before a flight, it is problematically difficult to efficiently operate the small unmanned aircraft. When, for example, a change is made in field work or a preliminarily unidentified obstacle is present, a flight planning path file needs to be generated again each time, thus taking much time and effort.

In flight control of an unmanned aircraft, therefore, operability and working efficiency are preferably improved to allow circumvention of these problems.

In view of this, it is the main object of the present invention to provide a technique which can improve the operability and working efficiency of flight control for an unmanned aircraft.

### [Solution to Problem] according to an example aspect of the example embodiment

An unmanned aircraft according to an aspect of the example embodiment includes:
capture means for capturing a projection object onto which light output from a directivity projector for outputting light is projected;
position calculation means for calculating a relative distance between a position of an unmanned aircraft body and an indicated light spot projected on the projection object by the directivity projector, using an image captured by the capture means, and calculating a position of the indicated light spot based on the calculated relative distance; and
flight control means for controlling a flight of the unmanned aircraft body based on a flight path generated according to the calculated position of the indicated light spot.

An unmanned aircraft control system according to an aspect of the example embodiment includes:
an unmanned aircraft;
a directivity projector that outputs light; and
a controller,
wherein the unmanned aircraft includes
capture means for capturing a projection object onto which light output from the directivity projector is projected, and
the controller includes:
   position calculation means for calculating a relative distance between a position of the unmanned aircraft and an indicate d light spot projected on the projection object by the directivity projector, using an image captured by the capture means, and calculating a position of the indicated light spot based on the calculated relative distance; and
   flight control means for controlling a flight of the unmanned aircraft based on a flight path generated according to the calculated position of the indicated light spot.

A flight control method according to an aspect of the example embodiment includes:
capturing a projection object onto which light output from a directivity projector for outputting light is projected;
calculating a relative distance between an unmanned aircraft and an indicated light spot projected on the projection object by the directivity projector, using a captured image;
calculating a position of the indicated light spot based on the calculated relative distance; and
controlling a flight of the unmanned aircraft based on a flight path generated according to the calculated position of the indicated light spot.

A program storage medium according to an aspect of the example embodiment stores a computer program for causing a computer to perform:
calculating, using a captured image captured by capturing a projection object onto which light output from a directivity projector for outputting light is projected, a relative distance between the unmanned aircraft and an indicated light spot projected on the projection object by the directivity projector, and calculating a position of the indicated light spot based on the calculated relative distance; and
controlling a flight of the unmanned aircraft based on a flight path generated according to the calculated position of the indicated light spot.

### [Advantageous Effects of Invention]

According to the present invention, the operability and working efficiency of flight control for an unmanned aircraft can be improved.

### [Brief Description of Drawings]

Fig. 1 is a block diagram illustrating one example embodiment of an unmanned aircraft in a first example embodiment according to the present invention.
Fig. 2 is a view illustrating an exemplary state of the unmanned aircraft used.
Fig. 3 is a view illustrating the relative distance between the position of an unmanned aircraft body and that of an indicated light spot.
Fig. 4 is a view illustrating an exemplary flight area.
Fig. 5 is a view illustrating an exemplary prohibited area.
Fig. 6 is a view illustrating an exemplary flight in a trace mode.
Fig. 7 is a view illustrating an exemplary flight in a shortest mode.
Fig. 8 is a flowchart illustrating an exemplary operation of the unmanned aircraft.
Fig. 9 is a block diagram illustrating one example embodiment of an unmanned aircraft control system in a second example embodiment according to the present invention.
Fig. 10 is a view illustrating an exemplary state of the unmanned aircraft control system used.
Fig. 11 is a diagram illustrating an exemplary operation of the unmanned aircraft control system.
Fig. 12 is a block diagram illustrating an unmanned aircraft in a third example embodiment according to the present invention.
Fig. 13 is a block diagram illustrating an unmanned aircraft control system in a fourth example embodiment according to the present invention.

### [Example Embodiment]

Example embodiments of the present invention will be described below with reference to the drawings.

### <First Example Embodiment>

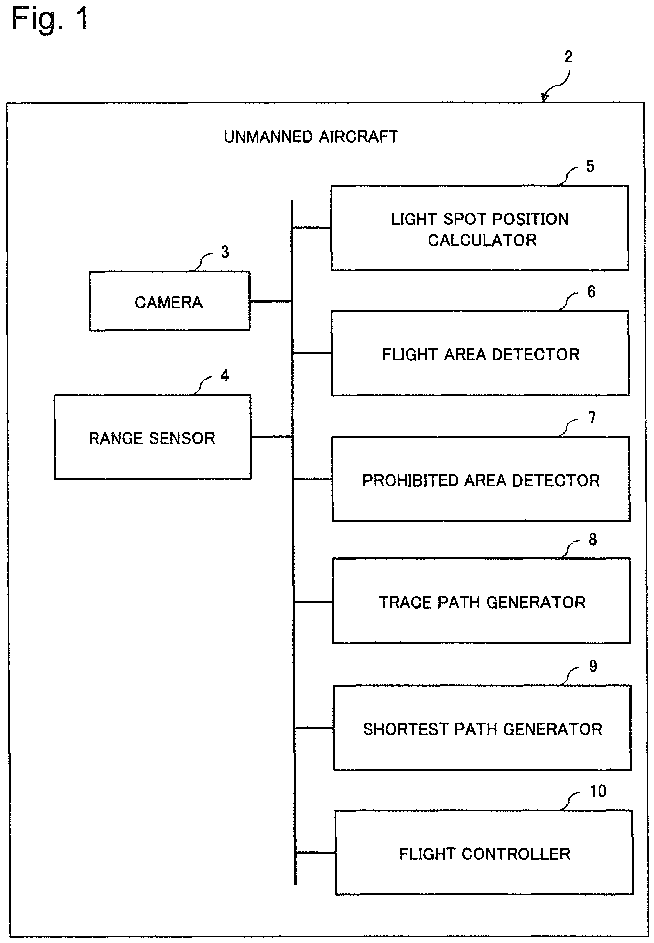

Fig. 1 is a block diagram illustrating the configuration of an unmanned aircraft in a first example embodiment according to the present invention. An unmanned aircraft 2 in the first example embodiment includes a camera 3, a range sensor 4, a light spot position calculator 5, a flight area detector 6, a prohibited area detector 7, a trace path generator 8, a shortest path generator 9, and a flight controller 10. More specifically, the unmanned aircraft 2 is equipped with the camera 3 and the range sensor 4. The unmanned aircraft 2 includes the light spot position calculator 5, the flight area detector 6, the prohibited area detector 7, the trace path generator 8, the shortest path generator 9, and the flight controller 10 inside.

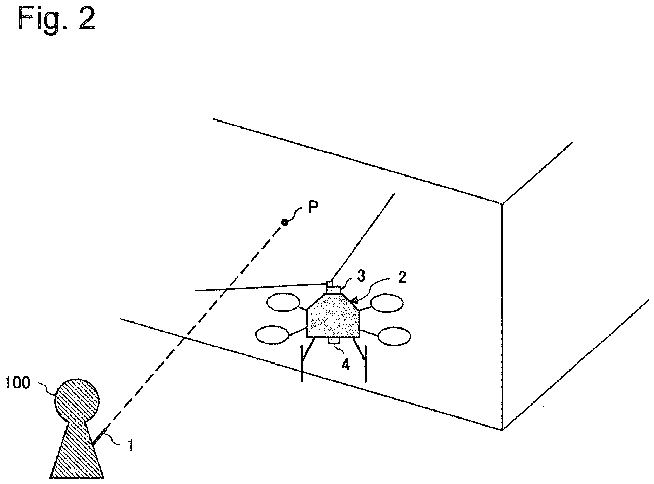

Fig. 2 is a view illustrating an exemplary state of the unmanned aircraft 2 in the first example embodiment used. The unmanned aircraft 2 illustrated in Fig. 2 is designed as, for example, a drone or a multi-rotor helicopter. The unmanned aircraft 2 in the first example embodiment is manipulated by a pilot 100 using a directivity projector 1. More specifically, the pilot 100 indicates a target spot P to move the unmanned aircraft 2, using light emitted by the directivity projector 1.

The directivity projector 1 is used to indicate the direction of flight of the unmanned aircraft 2. The directivity projector 1 is implemented using, for example, a Light Emitting Diode (LED) projector possessing directivity or a laser pointer. The directivity projector 1 is handled by the pilot 100 of the unmanned aircraft 2, and light emitted by the directivity projector 1 is projected onto a projection object that allows recognition of the light. The light projected on the projection object by the directivity projector 1 will be referred to as an indicated light spot P (or simply as an indicated light spot) hereinafter. The indicated light spot serves as a movement target spot for the unmanned aircraft 2. To prevent the unmanned aircraft 2 from colliding with the projection object, a separation distance representing an area to prohibit an entry from the projection object and set based on, for example, the size of the unmanned aircraft 2 is taken into consideration in flight control of the unmanned aircraft 2.

The projection object need be capable of projecting light emitted by the directivity projector 1 and is not limited. For example, the projection object is implemented as a wall surface in Fig. 2. However, the projection object is not limited to a wall surface and may be implemented as, for example, a pipe or a grove.

The camera 3 serves as an image device that captures the projection object and captures the indicated light spot P projected on the projection object by the directivity projector 1. More specifically, the camera 3 detects the indicated light spot in a predetermined mode of light projection and captures a still image or a video image containing the detected indicated light spot.

The range sensor 4 acquires distance information to the projection object. The range sensor 4 is implemented using, for example, a laser range finder.

When a lens in the camera 3 does not face the projection object (for example, a wall surface) straight, the projection object in an image captured by the camera 3 suffers from distortion. To cope with this situation, the camera 3 may calculate the tilt of the camera 3 with respect to the projection object using, for example, the distance information acquired from the range sensor 4 and correct the distortion of the projection object in the captured image due to this tilt.

Acquisition of distance information to the projection object using the range sensor 4 will be described in the first example embodiment. It is noted that the distance information may also be acquired by a device other than the range sensor 4. A device which can acquire distance information may be also referred to as a distance acquisition device hereinafter.

For example, the distance acquisition device may acquire distance information using stereovision by the camera 3. The distance acquisition device may also acquire distance information using vision Simultaneous Localization and Mapping (SLAM).

The light spot position calculator 5 includes a function of calculating a position of the indicated light spot P projected on the projection object by the directivity projector 1. For example, the light spot position calculator 5 calculates relative distance between a position of the unmanned aircraft 2 (a position of an unmanned aircraft body) and the position of the indicated light spot P using the captured image. The light spot position calculator 5 calculates the position of the indicated light spot P based on the calculated relative distance.

More specifically, the light spot position calculator 5 detects the position of the unmanned aircraft 2 (the position of the unmanned aircraft body) using, for example, Global Positioning System (GPS). In this case, the light spot position calculator 5 calculates the position of the indicated light spot P using the position of the unmanned aircraft body detected using the GPS, and the relative distance.

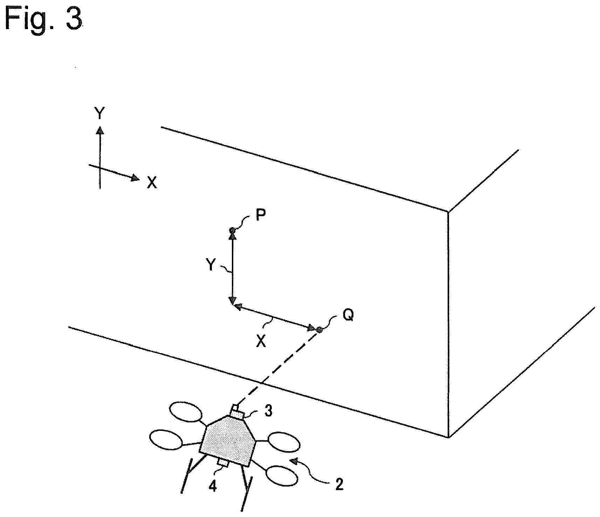

Fig. 3 is a view for explaining the relative distance between the position of the unmanned aircraft body and the position of the indicated light spot P. Note that the relative distance between the position of the unmanned aircraft body and the position of the indicated light spot P is represented using an X-relative distance X component and a Y-relative distance Y component with reference to an unmanned aircraft body position Q projected on the projection object (wall surface), as illustrated in Fig. 3. The light spot position calculator 5 calculates the relative distance X component and the relative distance Y component using information concerning the camera angle of view, the distance between the projection object (wall surface) and the unmanned aircraft body, and the pixel position of the indicated light spot P in the captured image.

In the foregoing description, the GPS is used in detecting the position of the unmanned aircraft body (flight position), but the present invention is not limited to the GPS, and a three-dimensional survey device, radio field strength, or the like may even be used in detecting the position of the unmanned aircraft body.

The flight area detector 6 includes a function of specifying an area to permit a flight of the unmanned aircraft 2 (to be referred to as a flight area hereinafter). More specifically, the pilot represents a closed range indicating the flight area, by a motion of the indicated light spot in accordance with a predetermined procedure using the directivity projector 1, and the camera 3 captures the motion of the indicated light spot. When the captured indicated light spot exhibits a predetermined mode, the flight area detector 6 determines that the motion of the indicated light spot represents a flight area and specifies the flight area based on the captured indicated light spot.

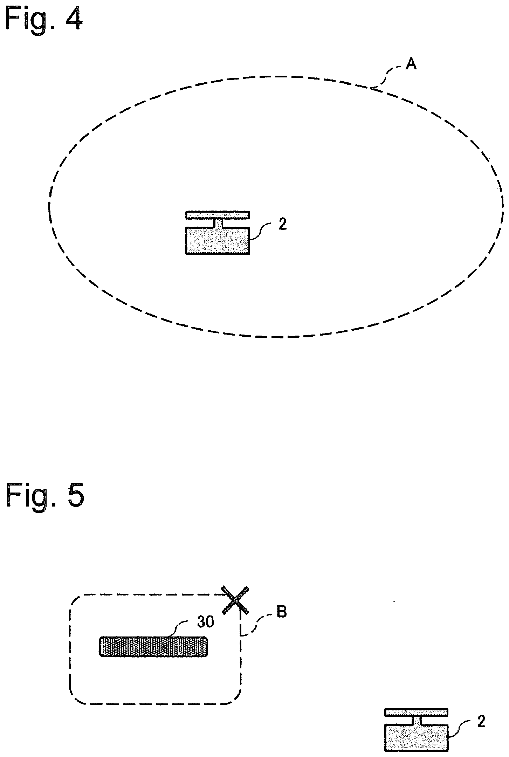

Fig. 4 is an explanatory view illustrating an exemplary flight area. In the example illustrated in Fig. 4, a range which includes the unmanned aircraft 2 and is bounded by a broken line A is set as a flight area. When the flight area is set, the flight controller 10 (to be described later) controls a flight to keep the unmanned aircraft 2 from deviating from the flight area.

Various modes are applicable to a mode of the indicated light spot in indicating the flight area (that is, a mode for bringing about a difference from the indicated light spot indicating the movement target spot). To bring about the difference from the indicated light spot indicating the movement target spot, color of a light beam output from the directivity projector 1, a motion of the indicated light spot, or the shape of the indicated light spot, for example, is used. In place of the mode of the indicated light spot, a configuration which causes the pilot to recognize, using a sound, that the indicated light spot indicates not the movement target spot but the flight area may be provided in the flight area detector 6 of the unmanned aircraft 2. A method for causing the flight area detector 6 to recognize that the indicated light spot indicates the flight area need be determined in advance and is not limited.

The prohibited area detector 7 specifies an area to prohibit the flight of the unmanned aircraft 2 (to be referred to as a prohibited area hereinafter). The area is specified by a method similar to that for specifying the flight area. For example, the pilot represents a closed range using the motion of the indicated light spot projected by the directivity projector 1, and the camera 3 captures the motion of the indicated light spot. When the captured indicated light spot exhibits a predetermined mode, the prohibited area detector 7 determines that the motion of the indicated light spot indicates the prohibited area and specifies the prohibited area based on the captured indicated light spot.

When, for example, an obstacle such as a lighting fixture is clearly identified in advance, the pilot moves light emitted by the directivity projector 1 along the edge of an area designated as the prohibited area surrounding the obstacle based on a predetermined procedure. When the prohibited area detector 7 determines that the motion of the indicated light spot indicates the prohibited area, it specifies the prohibited area based on the captured indicated light spot. The mode of the indicated light spot in indicating the prohibited area is a predetermined appropriate mode different from the mode of the indicated light spot in indicating the flight area.

Fig. 5 is an explanatory view illustrating an exemplary prohibited area. In the example illustrated in Fig. 5, a range bounded by a broken line B surrounding an obstacle 30 is set as the prohibited area. When the prohibited area is set, the flight controller 10 (to be described later) controls the flight of the unmanned aircraft 2 to keep the unmanned aircraft 2 from entering the prohibited area.

In this manner, at least one of the flight area detector 6 and the prohibited area detector 7 detects at least one of the flight area and the prohibited area based on the indicated light spot captured by the camera 3.

In the first example embodiment, a trace mode or a shortest mode is used as a flight mode for the unmanned aircraft 2. More specifically, the pilot selects either mode and sets the selected mode in the unmanned aircraft 2. The flight mode may be changed as needed in accordance with an instruction from the pilot. An appropriate method is employed to select and indicate the flight mode. Examples of methods for selecting and indicating the flight mode include a method for using, for example, the color of the light beam emitted by the directivity projector 1, the motion of the indicated light spot projected by the directivity projector 1, the shape of the indicated light spot, or a sound.

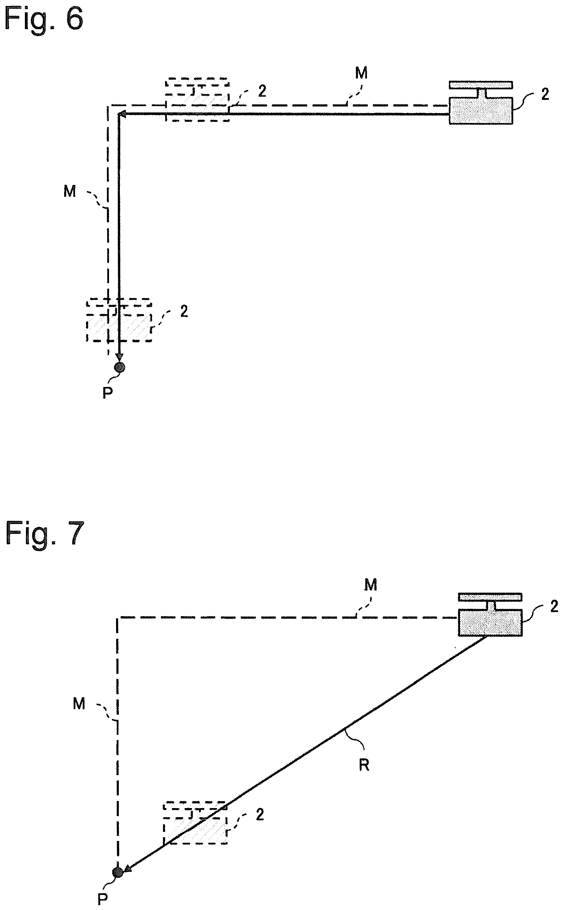

Fig. 6 is a view illustrating an exemplary flight in the trace mode. Fig. 7 is a view illustrating an exemplary flight in the shortest mode. In the trace mode, the unmanned aircraft 2 moves while tracing a movement track M of an indicated light spot generated by the pilot, as illustrated in Fig. 6. In the shortest mode, the unmanned aircraft 2 moves in a shortest path R to the position of the indicated light spot P, independently of the movement track M of the indicated light spot generated by the pilot, as illustrated in Fig. 7.

The trace path generator 8 generates the movement track M of the indicated light spot directly as a flight path when the trace mode is set.

The shortest path generator 9 generates the flight path connecting the position of the indicated light spot P to the position of the unmanned aircraft body in the shortest distance as the shortest path R when the shortest mode is set. In this manner, the trace path generator 8 or the shortest path generator 9 generates the flight path for the unmanned aircraft body toward the position of the indicated light spot P in accordance with the designated flight mode.

When passage through the prohibited area is conceivable in generating the flight path, both the trace path generator 8 and the shortest path generator 9 generate the flight path including a shortest bypass (avoidance path) to avoid the prohibited area.

When the unmanned aircraft 2 almost deviates from the flight area during movement or almost enters the prohibited area, the trace path generator 8 and the shortest path generator 9 calculate an avoidance path in real time to prevent the deviation from the flight area or the entry into the prohibited area and correct the flight path in consideration of the avoidance path. The flight state in which the deviation from the flight area almost occurs or that in which the entry into the prohibited area almost occurs is detected based on, for example, the positional relationship between the position of the unmanned aircraft body and the flight area.

Even when the unmanned aircraft 2, during movement, detects an obstacle in danger of hindering movement or touching, the trace path generator 8 and the shortest path generator 9 calculate the avoidance path in real time and correct the flight path in consideration of the avoidance path. An appropriate method is employed to detect the obstacle. Examples of methods for detecting the obstacle include a method based on the image captured by the camera 3 and a method using the range sensor 4 such as a laser range finder. Since these methods for detecting the obstacle are widely known, a detailed description thereof will not be given.

The flight controller 10 calculates the amount of movement of the unmanned aircraft body in accordance with the generated shortest path or trace path and controls a motor and the like. With this operation, the unmanned aircraft 2 moves to the target spot through each flight path. Since each flight path is generated in accordance with the calculated position of the indicated light spot, the flight controller 10 can be said to control the flight of the unmanned aircraft body through the flight path generated in accordance with the calculated position of the indicated light spot.

Depending on the orientation of the camera 3, the indicated light spot may not be found within the angle of view of the camera 3. In this case, the flight controller 10 may make the indicated light spot fall within the angle of view of the camera 3 by lifting, lowering, or turning the unmanned aircraft body.

The indicated light spot position calculator 5, the flight area detector 6, the prohibited area detector 7, the trace path generator 8, the shortest path generator 9, and the flight controller 10 are implemented by the CPU (Central Processing Unit) of a computer operating in accordance with a computer program (program). The control of operating the camera 3 is also implemented by the CPU of the computer operating in accordance with the computer program.

For example, the program is stored in a storage (not illustrated) of the unmanned aircraft 2. The CPU operates as the light spot position calculator 5, the flight area detector 6, the prohibited area detector 7, the trace path generator 8, the shortest path generator 9, and the flight controller 10 by reading out the program from the storage and executing this program.

Each of the light spot position calculator 5, the flight area detector 6, the prohibited area detector 7, the trace path generator 8, the shortest path generator 9, and the flight controller 10 may be implemented as dedicated hardware.

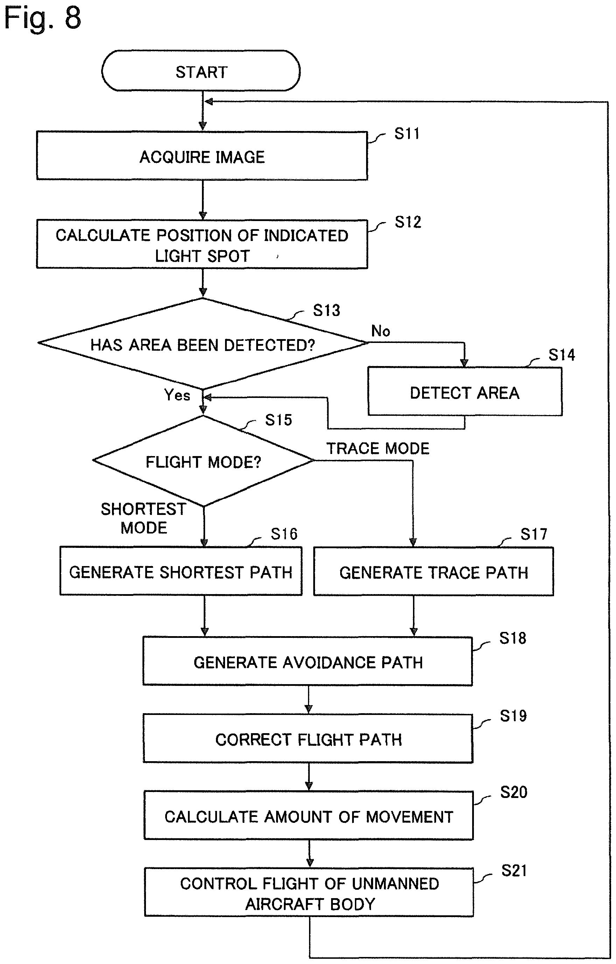

The operation of the unmanned aircraft 2 in the first example embodiment will be described below. Fig. 8 is a flowchart illustrating an exemplary operation of the unmanned aircraft 2 in the first example embodiment.

First, the pilot projects the indicated light spot onto a portion indicating the flight target position for the unmanned aircraft 2 on the projection object such as a wall surface, using the directivity projector 1. When the camera 3 mounted in the unmanned aircraft 2 acquires the image of the indicated light spot (step S11), the light spot position calculator 5 calculates the position of the indicated light spot (step S12).

It is determined whether the flight area detector 6 has detected the flight area or the prohibited area detector 7 has detected the prohibited area (step S13). When neither the flight area nor the prohibited area has been detected (No in step S13), a message for requesting information concerning the flight area or the prohibited area is issued from the unmanned aircraft 2 to the pilot. When information concerning the flight area is sent using light emitted by the directivity projector 1, the flight area detector 6 detects the flight area. On the other hand, when information concerning the prohibited area is sent using light emitted by the directivity projector 1, the prohibited area detector 7 detects the prohibited area (step S14). The processes in step S15 and subsequent steps are then performed.

When the flight area or the prohibited area has been detected (Yes in step S13), the flight mode is determined (step S15). When the flight mode is the "shortest mode" (the "shortest mode" in step S15), the shortest path generator 9 generates the shortest path (step S16). When the flight mode is the "trace mode" (the "trace mode" in step S15), the trace path generator 8 generates the trace flight path (step S17).

When the obstacle has been detected in the generated flight path, the trace path generator 8 or the shortest path generator 9 generates the avoidance path for the obstacle used to correct the flight area according to the flight mode (step S18).

Even when the flight path deviates from the flight area, the trace path generator 8 or the shortest path generator 9 generates the avoidance path for preventing the deviation from the flight area, in accordance with the flight mode. When an avoidance path is generated, the trace path generator 8 or the shortest path generator 9 corrects the flight path (step S19).

Even when the flight path enters the prohibited area, the trace path generator 8 or the shortest path generator 9 generates the avoidance path for preventing the entry into the prohibited area and corrects the flight path.

The flight controller 10 calculates the amount of movement of the unmanned aircraft body in accordance with the generated shortest path or trace path (step S20). The flight controller 10 controls the flight of the unmanned aircraft 2 by controlling the motor and the like (step S21). The processes in step S11 and subsequent steps are then repeated.

As described above, in the unmanned aircraft 2 according to the first example embodiment, the camera 3 captures the projection object. The light spot position calculator 5 calculates the relative distance between the position of the unmanned aircraft body and the indicated light spot projected on the projection object by the directivity projector 1, using the image captured by the camera 3, and calculates the position of the indicated light spot based on the calculated relative distance. The flight controller 10 controls a flight of the unmanned aircraft body based on a flight path generated in accordance with the calculated position of the indicated light spot. Hence, the unmanned aircraft 2 in the first example embodiment can improve the operability and working efficiency of flight control.

For example, to manipulate freely an unmanned aircraft by hand, a pilot needs to learn a manual steering skill by persistent training. In contrast to this, in the first example embodiment, the pilot can manipulate the unmanned aircraft by indicating the destination on the projection object such as a wall surface using light emitted by the directivity projector 1. In other words, the operability of the unmanned aircraft 2 improves.

In this manner, in the first example embodiment, the pilot can manipulate the unmanned aircraft by indicating the desired destination spot, using light emitted by the directivity projector, instead of manual steering using a proportional system. Therefore, everyone can manipulate easily and freely the unmanned aircraft without learning a high steering skill. As a result, the unmanned aircraft 2 in the first example embodiment also achieves less operation cost and introduction barrier.

A method is available to generate the flight planning path in advance to operate the unmanned aircraft instead of manual steering. However, the method requires generating the flight planning path for each flight. In contrast to this, in the unmanned aircraft 2 according to the first example embodiment, the pilot allows the unmanned aircraft to make the flight to the destination by a simple operation for indicating the destination using light emitted by the directivity projector. Therefore, the unmanned aircraft 2 in the first example embodiment can improve the working efficiency of a mission using this unmanned aircraft.

In this manner, in the unmanned aircraft 2 according to the first example embodiment, the pilot can easily manipulate the flight using the directivity projector because no need arises to generate the flight planning path for each flight. Therefore, the unmanned aircraft can be efficiently operated.

A modification of the unmanned aircraft in the first example embodiment will be described below. In the first example embodiment, the flight controller 10 includes the function of generating the flight path in accordance with the flight mode. In the modification, the flight controller 10 generates the flight path in consideration of safety as well.

For example, a safety factor is assumed as a value indicating safety. The safety factor is a numerical value calculated using the distance to the obstacle or the prohibited area, and unmanned aircraft body information such as the moving velocity of the unmanned aircraft body in each three-dimensional direction and the tilt of the unmanned aircraft body with respect to a predetermined reference surface. More specifically, the flight controller 10 calculates the safety factor which is higher in areas farther from the prohibited area and is also higher for a lower moving velocity and a smaller amount of tilt.

The flight controller 10 controls the flight of the unmanned aircraft body to make the calculated safety factor exceed a predetermined reference safety factor. The reference safety factor can be set as appropriate in accordance with, for example, the working environment and the working time.

### <Second Example Embodiment

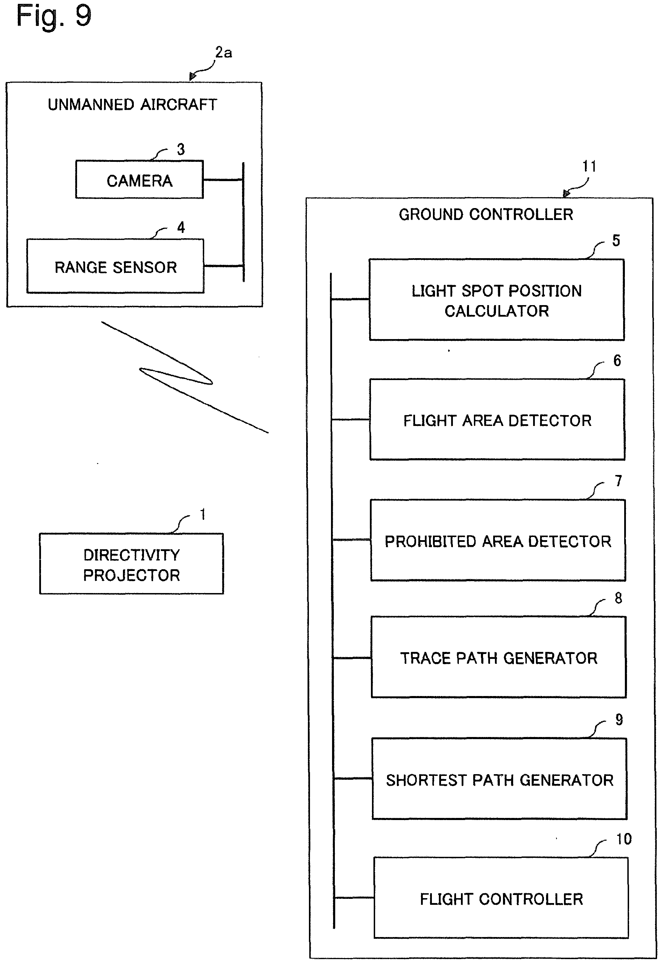

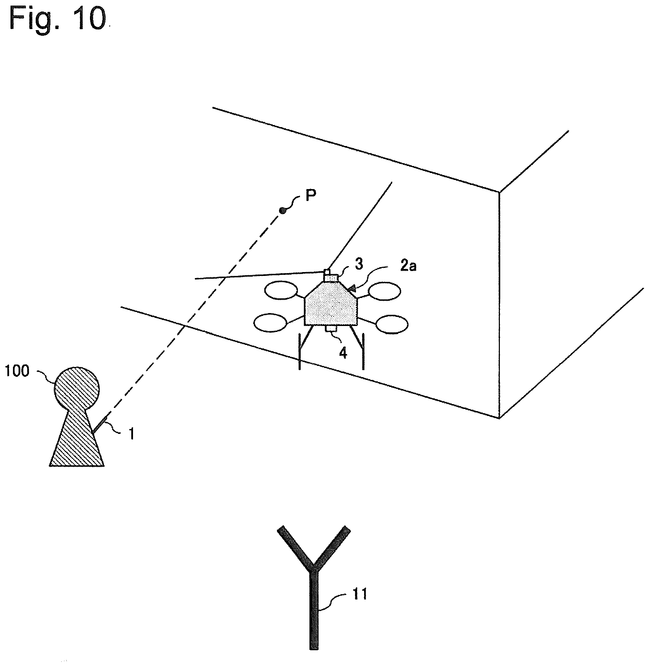

A second example embodiment according to the present invention will be described next. The second example embodiment illustrates one example embodiment of an unmanned aircraft control system. Fig. 9 is a block diagram illustrating the configuration of an unmanned aircraft control system in the second example embodiment according to the present invention. The unmanned aircraft control system in the second example embodiment includes the directivity projector 1, an unmanned aircraft 2a, and a ground controller 11. Fig. 10 is an explanatory view illustrating an exemplary state of the unmanned aircraft control system in the second example embodiment used.

As illustrated in Figs. 9 and 10, in the second example embodiment, the unmanned aircraft 2a includes the camera 3 and the range sensor 4. The ground controller 11 includes the light spot position calculator 5, the flight area detector 6, the prohibited area detector 7, the trace path generator 8, the shortest path generator 9, and the flight controller 10.

More specifically, the second example embodiment is different from the first example embodiment in that the unmanned aircraft 2a includes the camera 3 and the range sensor 4, and the ground controller 11 includes the remaining components. In other words, the ground controller 11 includes the light spot position calculator 5, the flight area detector 6, the prohibited area detector 7, the trace path generator 8, the shortest path generator 9, and the flight controller 10.

The functions of the directivity projector 1, the camera 3, and the range sensor 4 are similar to those of the directivity projector 1, the camera 3, and the range sensor 4 described in the first example embodiment. The functions of the light spot position calculator 5, the flight area detector 6, the prohibited area detector 7, the trace flight path generator 8, the shortest flight path generator 9, and the flight controller 10 are similar to those described in the first example embodiment, except that communication is performed with the unmanned aircraft 2a by wireless communication.

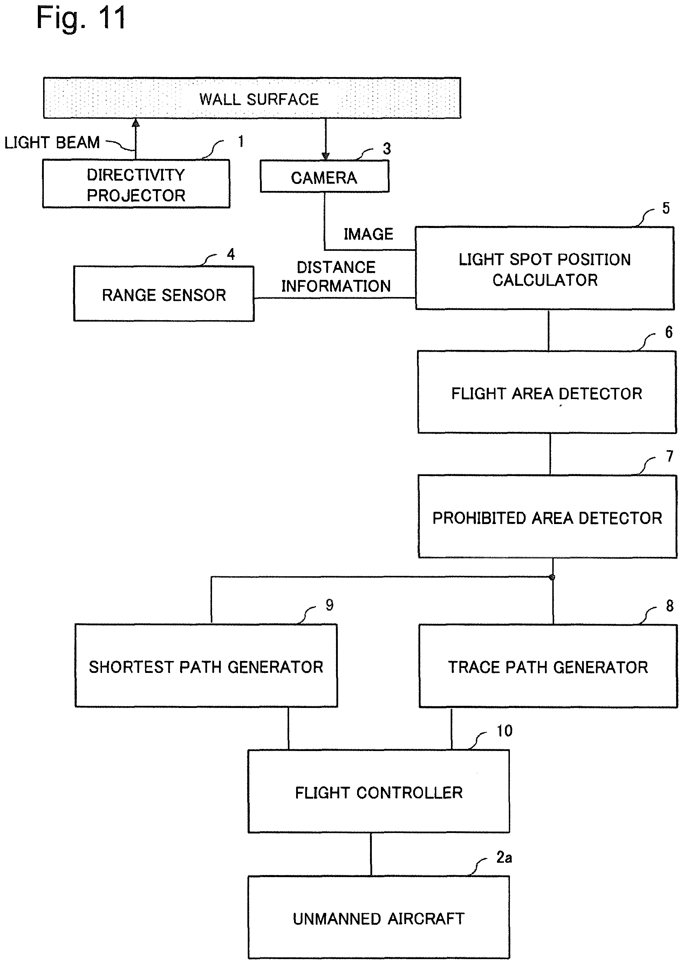

Fig. 11 is a diagram for explaining an exemplary operation of the unmanned aircraft control system in the second example embodiment. Assume herein a wall surface as a projection object. First, a pilot projects the indicated light spot onto the wall surface using the directivity projector 1. Upon capturing the indicated light spot, the camera 3 transmits the captured image containing an image of the indicated light spot to the ground controller 11 (more specifically, the light spot position calculator 5). The range sensor 4 detects the distance from the unmanned aircraft body (unmanned aircraft 2a) to the wall surface and transmits the detected distance to the ground controller 11 (more specifically, the light spot position calculator 5). A control unit (not illustrated) of the unmanned aircraft 2a, for example, detects the position of the unmanned aircraft body using the GPS and transmits information concerning the detected position of the unmanned aircraft body to the ground controller 11.

The light spot position calculator 5 calculates the relative distance between the indicated light spot and the unmanned aircraft 2a using the received image and the distance information and calculates the position of the indicated light spot using information concerning this relative distance and information concerning the position of the unmanned aircraft 2a. Similar to the first example embodiment, the flight area detector 6 specifies the flight area and the prohibited area detector 7 specifies the prohibited area. The trace path generator 8 or the shortest path generator 9 generates the flight path in accordance with the selected flight mode. The flight controller 10 generates and transmits control information based on the generated flight path to the unmanned aircraft 2a.

As described above, in the second example embodiment, since the ground controller 11 includes the function of controlling a flight of the unmanned aircraft 2a, fewer functions are mounted in the unmanned aircraft 2a, and a simple control configuration of the unmanned aircraft 2a can thus be achieved.

In the second example embodiment, the ground controller 11 includes the light spot position calculator 5, the flight area detector 6, the prohibited area detector 7, the trace path generator 8, the shortest path generator 9, and the flight controller 10. Instead of that, some of the light spot position calculator 5, the flight area detector 6, the prohibited area detector 7, the trace path generator 8, the shortest path generator 9, and the flight controller 10 may be included in the unmanned aircraft 2a.

### <Third Example Embodiment>

A third example embodiment according to the present invention will be described below.

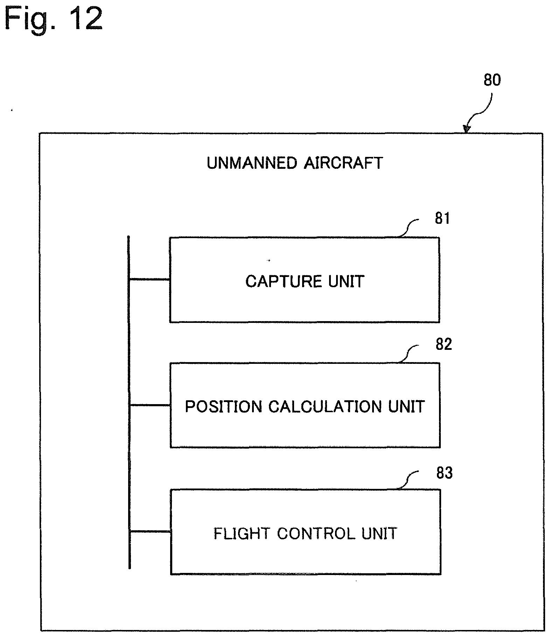

Fig. 12 is a block diagram illustrating an outline of an unmanned aircraft in the third example embodiment. An unmanned aircraft 80 in the third example embodiment includes a capture unit 81, a position calculation unit 82, and a flight control unit 83. The capture unit 81 is designed as, for example, a camera and includes a function of capturing a projection object (for example, a wall surface). The position calculation unit 82 includes a function of calculating a relative distance between a position of an unmanned aircraft body (unmanned aircraft 80) and an indicated light spot projected on a projection object by a directivity projector, using an image captured by the capture unit 81. The position calculation unit 82 further includes a function of calculating a position of the indicated light spot projected by the directivity projector based on the calculated relative distance. The flight control unit 83 includes a function of controlling a flight of the unmanned aircraft body (unmanned aircraft 80) based on a flight path generated in accordance with the calculated position of the indicated light spot.

With such a configuration, the unmanned aircraft 80 can improve the operability and working efficiency of flight control.

The capture unit 81 may include a function of capturing a mode of light projection by a predetermined directivity projector. The position calculation unit 82 may calculate at least one of a flight area and a prohibited area in accordance with the captured mode of light projection. The flight control unit 83 may control the flight of the unmanned aircraft body based on the flight path for making the flight in the flight area by avoiding the prohibited area.

With such a configuration, the unmanned aircraft 80 makes the flight as limited in a navigable area designated by a pilot using the directivity projector.

The flight control unit 83 may generate the flight path according to the designated flight mode (for example, the trace mode and the shortest mode) and control the flight of the unmanned aircraft body based on the generated flight path.

When an indicated light spot is absent within the angle of view of the capture unit 81, the flight control unit 83 may cause the capture unit 81 to capture the indicated light spot by control for lifting, lowering, or turning the unmanned aircraft body.

The position calculation unit 82 may detect the position of the unmanned aircraft body using, for example, the GPS and calculate the position of the indicated light spot based on the detected position of the unmanned aircraft body, and the relative distance between the position of the unmanned aircraft body and the indicated light spot.

The flight control unit 83 calculates a safety factor indicating flight safety based on the distance from the unmanned aircraft body (unmanned aircraft 80) to the prohibited area, the moving velocity of the unmanned aircraft body, and the tilt of the unmanned aircraft body with respect to a preset reference surface. The flight control unit 83 may control the flight of the unmanned aircraft body to make the calculated safety factor exceed a predetermined reference safety factor.

The unmanned aircraft 80 may further include a distance acquisition device which acquires distance information to the projection object. The capture unit 81 may correct distortion of the captured image due to the tilt of the optical axis of the capture unit 81 with respect to the projection object, using the distance information acquired from the distance acquisition device.

### <Fourth Example Embodiment>

A fourth example embodiment according to the present invention will be described below.

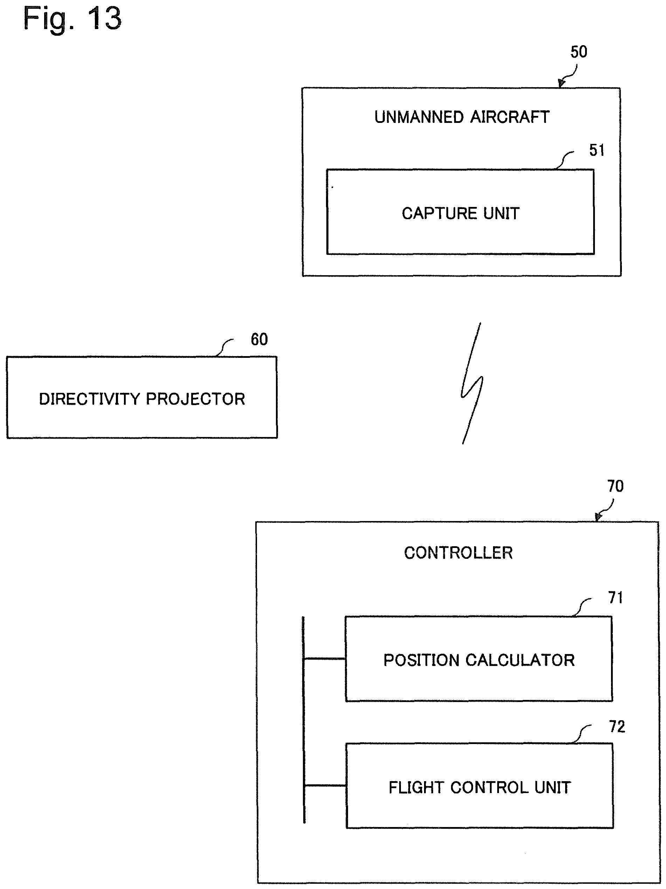

Fig. 13 is a block diagram illustrating an outline of an unmanned aircraft control system in the fourth example embodiment. The unmanned aircraft control system in the fourth example embodiment includes an unmanned aircraft 50, a directivity projector 60 used by a pilot who externally steers the unmanned aircraft 50, and a controller 70.

The unmanned aircraft 50 includes a capture unit 51 (for example, a camera) which captures a projection object. The controller 70 includes a position calculator 71 and a flight control unit 72. The position calculator 71 includes a function of calculating a relative distance between the unmanned aircraft 50 and an indicated light spot projected on the projection object by the directivity projector 60, using the image captured by the capture unit 51, and calculating the position of the indicated light spot using the calculated relative distance. The flight control unit 72 includes a function of controlling a flight of the unmanned aircraft 50 based on a flight path generated in accordance with the calculated position of the indicated light spot.

The unmanned aircraft control system in the fourth example embodiment can improve the operability and working efficiency of flight control of the unmanned aircraft 50, similar to the first to third example embodiments, with the above-mentioned configuration.

Part or all of the above-described example embodiments may be described as in the following supplementary notes, but they are not limited thereto.

### (Supplementary Note 1)

An unmanned aircraft including:
a capture unit that captures a projection object;
a position calculation unit that calculates a relative distance between a position of an unmanned aircraft body and an indicated light spot projected on the projection object by a directivity projector, using a captured image, and calculates a position of the indicated light spot based on the calculated relative distance; and
a flight control unit that controls a flight of the unmanned aircraft body based on a flight path generated according to the calculated position of the indicated light spot.

### (Supplementary Note 2)

The unmanned aircraft according to supplementary note 1, wherein the capture unit captures a mode of light projection by a predetermined directivity projector,
the position calculation unit calculates at least one of a flight area and a prohibited area in accordance with the captured mode of light projection, and
the flight control unit controls the flight of the unmanned aircraft body based on a flight path for making a flight in the flight area by avoiding the prohibited area.

### (Supplementary Note 3)

The unmanned aircraft according to supplementary note 1 or 2, wherein the flight control unit selects and generates a flight path for controlling the flight of the unmanned aircraft body to allow movement while tracing a movement track of the indicated light spot or a flight path for controlling the flight of the unmanned aircraft body toward a current position of the indicated light spot, in accordance with a designated flight mode, and controls the flight of the unmanned aircraft body based on the generated flight path.

### (Supplementary Note 4)

The unmanned aircraft according to any one of supplementary notes 1 to 3, wherein the flight control unit causes the capture unit to detect the indicated light spot by lifting, lowering, or turning the unmanned aircraft body when the indicated light spot is absent within an angle of view of the capture unit.

### (Supplementary Note 5)

The unmanned aircraft according to any one of supplementary notes 1 to 4, wherein the position calculation unit detects a current position of the unmanned aircraft body and calculates the position of the indicated light spot by adding the relative distance to the detected position of the unmanned aircraft body.

### (Supplementary Note 6)

The unmanned aircraft according to any one of supplementary notes 1 to 5, wherein the flight control unit calculates a safety factor indicating flight safety based on a distance to a prohibited area, a current moving velocity and tilt of the unmanned aircraft body, and controls the flight of the unmanned aircraft body to make the calculated safety factor exceed a predetermined allowable safety factor.

### (Supplementary Note 7)

The unmanned aircraft according to any one of supplementary notes 1 to 6, further including a distance acquisition device that acquires distance information to the projection object,
wherein the capture unit corrects distortion of the captured image due to a shift in orientation of the unmanned aircraft body, using the distance information acquired from the distance acquisition device.

### (Supplementary Note 8)

An unmanned aircraft control system including: an unmanned aircraft; a directivity projector used by a pilot who externally steers the unmanned aircraft; and a controller, the unmanned aircraft including: a capture unit that captures a projection object, and the controller including: a position calculation unit that calculates a relative distance between the unmanned aircraft and an indicated light spot projected on the projection object by the directivity projector, using a captured image, and calculates a position of the indicated light spot based on the calculated relative distance; and a flight control unit that controls a flight of the unmanned aircraft based on a flight path generated according to the calculated position of the indicated light spot.

### (Supplementary Note 9)

The unmanned aircraft control system according to supplementary note 8, wherein the capture unit captures a mode of light projection by a predetermined directivity projector, the position calculation unit calculates at least one of a flight area and a prohibited area in accordance with the captured mode of light projection, and the flight control unit controls the flight of the unmanned aircraft based on a flight path for making a flight in the flight area by avoiding the prohibited area.

### (Supplementary Note 10)

A flight control method for controlling a flight of an unmanned aircraft, the method including: capturing a projection object; calculating a relative distance between the unmanned aircraft and an indicated light spot projected on the projection object by a directivity projector, using a captured image; calculating a position of the indicated light spot based on the calculated relative distance; and controlling the flight of the unmanned aircraft based on a flight path generated according to the calculated position of the indicated light spot.

### (Supplementary Note 11)

The flight control method according to supplementary note 10, further including: capturing a mode of light projection by a predetermined directivity projector; calculating at least one of a flight area and a prohibited area in accordance with the captured mode of light projection; and controlling the flight of the unmanned aircraft based on a flight path for making a flight in the flight area by avoiding the prohibited area.

### (Supplementary Note 12)

A flight control program applied to a computer which controls a flight of an unmanned aircraft, the program causing the computer to perform: a capturing process of capturing a projection object; a position calculation process of calculating a relative distance between the unmanned aircraft and an indicated light spot projected on the projection object by a directivity projector, using a captured image, and calculating a position of the indicated light spot based on the calculated relative distance; and a flight control process of controlling the flight of the unmanned aircraft based on a flight path generated according to the calculated position of the indicated light spot.

### (Supplementary Note 13)

The flight control program according to supplementary note 12, wherein the program causes the computer to: capture a mode of light projection by a predetermined directivity projector in the capturing process; calculate at least one of a flight area and a prohibited area in accordance with the captured mode of light projection in the position calculation process; and control the flight of the unmanned aircraft based on a flight path for making a flight in the flight area by avoiding the prohibited area, in the flight control process.

The present invention has been described above using the above-described example embodiments as exemplary examples. However, the present invention is not limited to the above-described example embodiments. In other words, the present invention can employ various aspects which would be understood by those skilled in the art within the scope of the present invention.

This application claims priority based on Japanese Patent Application No. 2016-039845 filed on March 2, 2016, the disclosure of which is incorporated herein in its entirety.

### [Industrial Applicability]

The present invention is preferably applied to an unmanned aircraft remotely controlled in flight. The present invention is applicable in, for example, inspecting facilities such as a plant, a power station, and a building utilizing the unmanned aircraft. The general method requires a pilot highly skilled in steering, as well as requiring complicated work such as on-site flight path generation, but the present invention allows everyone to steer the unmanned aircraft in a short period.

The present invention may also be applied to the field of entertainment. Since the unmanned aircraft in the present invention allows intuitive manipulation in place of a flight path programmed in advance, flexible representation may be attained in entertainment using the unmanned aircraft.

Substituting a ground moving object for the unmanned aircraft in the present invention allows control of any moving object, regardless of whether an aircraft or a ground vehicle is targeted. Applying the technique according to the present invention to, for example, an automated vehicle allows easy parking and guidance.

### [Reference Signs List]

- 1: directivity projector
- 2: unmanned aircraft
- 3: camera
- 4: range sensor
- 5: light spot position calculator
- 6: flight area detector
- 7: prohibited area detector
- 8: trace path generator
- 9: shortest path generator
- 10: flight controller
- 11: ground controller

## Claims

1. An unmanned aircraft comprising:
capture means for capturing a projection object onto which light output from a directivity projector for outputting light is projected;
position calculation means for calculating a relative distance between a position of an unmanned aircraft body and an indicated light spot projected on the projection object by the directivity projector, using an image captured by the capture means, and calculating a position of the indicated light spot based on the calculated relative distance; and
flight control means for controlling a flight of the unmanned aircraft body based on a flight path generated according to the calculated position of the indicated light spot.

2. The unmanned aircraft according to claim 1, further comprising: area detection means for detecting at least one of a flight area as an area to permit a flight and a prohibited area as an area to prohibit a flight based on the indicated light spot captured by the capture means,
wherein the flight control means controls the flight of the unmanned aircraft body based on the flight path generated in consideration of the detected at least one of the prohibited area and the flight area.

3. The unmanned aircraft according to claim 1 or 2, wherein the flight control means controls the flight of the unmanned aircraft body based on the flight path according to a designated flight mode of a flight path for controlling the flight of the unmanned aircraft body to allow movement while tracing a movement track of the indicated light spot and a flight path for controlling the flight of the unmanned aircraft body toward the indicated light spot.

4. The unmanned aircraft according to any one of claims 1 to 3, wherein the flight control means causes the capture means to capture the indicated light spot by one of lifting, lowering and turning of the unmanned aircraft body when the indicated light spot is absent within an angle of view of the capture means.

5. The unmanned aircraft according to any one of claims 1 to 4, wherein the position calculation means acquires information on a position of the unmanned aircraft body, detects the position of the unmanned aircraft body based on the information, and calculates a position of the indicated light spot using the detected position of the unmanned aircraft body and the relative distance.

6. The unmanned aircraft according to any one of claims 1 to 5, wherein the flight control means calculates a safety factor indicating flight safety based on a distance to a prohibited area as an area to prohibit a flight, a moving velocity of the unmanned aircraft body, and a tilt of the unmanned aircraft body in a traveling direction with respect to a predetermined reference surface, and controls the flight of the unmanned aircraft body to make the calculated safety factor exceed a predetermined reference safety factor.

7. The unmanned aircraft according to any one of claims 1 to 6, further comprising a distance acquisition device that acquires distance information to the projection object,
wherein the capture means corrects distortion of the captured image due to a tilt of an optical axis of the capture means with respect to the projection object, using the distance information acquired from the distance acquisition device.

8. An unmanned aircraft control system comprising:
an unmanned aircraft;
a directivity projector that outputs light; and
a controller,
wherein the unmanned aircraft includes
capture means for capturing a projection object onto which light output from the directivity projector is projected, and
the controller includes:
position calculation means for calculating a relative distance between a position of the unmanned aircraft and an indicate d light spot projected on the projection object by the directivity projector, using an image captured by the capture means, and calculating a position of the indicated light spot based on the calculated relative distance; and
flight control means for controlling a flight of the unmanned aircraft based on a flight path generated according to the calculated position of the indicated light spot.

9. The unmanned aircraft control system according to claim 8, wherein the unmanned aircraft further includes area detection means for detecting at least one of a flight area as an area to permit a flight and a prohibited area as an area to prohibit a flight based on the indicated light spot captured by the capture means, and
the flight control means of the controller controls the flight of the unmanned aircraft based on the flight path generated in consideration of the detected at least one of the prohibited area and the flight area.

10. A flight control method comprising:
capturing a projection object onto which light output from a directivity projector for outputting light is projected;
calculating a relative distance between an unmanned aircraft and an indicated light spot projected on the projection object by the directivity projector, using a captured image;
calculating a position of the indicated light spot based on the calculated relative distance; and
controlling a flight of the unmanned aircraft based on a flight path generated according to the calculated position of the indicated light spot.

11. The flight control method according to claim 10, further comprising:
detecting at least one of a flight area as an area to permit a flight and a prohibited area as an area to prohibit a flight based on the indicated light spot in the captured image; and
controlling a flight of an unmanned aircraft body based on the flight path generated in consideration of the detected at least one of the prohibited area and the flight area.

12. A program storage medium storing a computer program for causing a computer to perform:
calculating, using a captured image captured by capturing a projection object onto which light output from a directivity projector for outputting light is projected, a relative distance between the unmanned aircraft and an indicated light spot projected on the projection object by the directivity projector, and calculating a position of the indicated light spot based on the calculated relative distance; and
controlling a flight of the unmanned aircraft based on a flight path generated according to the calculated position of the indicated light spot.

13. The program storage medium according to claim 12, further storing a computer program for causing the computer to perform:
detecting at least one of a flight area as an area to permit a flight and a prohibited area as an area to prohibit a flight based on the indicated light spot in the captured image; and
controlling a flight of an unmanned aircraft body based on the flight path generated in consideration of the detected at least one of the prohibited area and the flight area.
